# EUROPEAN PATENT SPECIFICATION

(11) **EP 1 308 825 B1**
(45) Date of publication and mention of the grant of the patent: **01.06.2005**
(21) Application number: 02079368.3
(22) Date of filing: 21.10.2002
(51) Int. Cl.: G06F 1/16

(54) **Detachable flat panel display**
Abnehmbarer Flachbildschirm
Ecran plat de visualisation amovible

(30) Priority: 01.11.2001 US 3832
(43) Date of publication of application: 07.05.2003
(73) Proprietor: EASTMAN KODAK COMPANY, Rochester, New York 14650 (US)
(72) Inventor: Polgar, Leslie G., Rochester, New York 14650-2201 (US); Cok, Ronald Steven, Rochester, New York 14650-2201 (US); Woodrow, Edward, Rochester, New York 14650-2201 (US); Yager, Kevin, Rochester, New York 14650-2201 (US)
(74) Representative: Weber, Etienne Nicolas

(56) References cited:
- WO-A-95/24007
- DE-A- 19 800 778
- GB-A- 2 331 422
- GB-A- 2 360 622
- US-A- 5 233 502
- PATENT ABSTRACTS OF JAPAN vol. 1999, no. 14, 22 December 1999 (1999-12-22) & JP 11 248485 A (SONY CORP.), 17 September 1999 (1999-09-17)
- KOWALSKY W. ET AL: 'OLED matrix displays: technology and fundamentals' 21 October 2001, pages 20 - 28, XP010570066

## Description

The present invention relates to flat panel displays and more particularly to disaggregated organic light emitting diode displays.

Portable electronic devices such as cell phones, pagers, PDAs, global position systems, and electronic cameras having flat-panel displays are becoming more and more common. The quality of the displays on many of these devices is less than pleasing and barely adequate for the purposes. Small-scale (e.g. 10 by 16 cm) high-quality flat-panel color displays using organic light emitting diodes are able to provide high-quality images that are visible in ambient illumination conditions and use less power than previous display technology. These OLED displays have been proposed for use with a variety of portable electronic devices to improve the quality of the display. However, there is a cost associated with providing a high quality display for each of these devices.

Many computer systems include separable components, that is components that can be unplugged from each other and, in some cases, plugged into other systems. Examples include floppy disk drives, keyboards, and CRT displays. Some of these devices utilize a common electrical interface, for example a serial or parallel port available with most computers. However, these devices are generally intended for use with a single system and are not readily applied to a wide variety of computing devices. In particular, although a CRT display device is a part of many computer systems, it is not portable and requires some set up to properly interface with a given system.

Laptop computers also include a variety of components, some of which can be readily removed or replaced, particularly within special docking cradles intended to hold the component. For example, battery packs, Digital Versatile Disk drives, and Compact Disk drives are all removable components available with the IBM Thinkpad laptop computer. However, these components are not intended for use with a multiplicity of different kinds of devices but are restricted in their application to a specific computer.

Memory devices such as CompactFlash™ memory are presently used with multiple devices such as digital cameras, PDAs and personal computers. There are also portable electronic devices that include external peripherals. For example, folding keyboards can be purchased as component peripherals for PDAs. Likewise, special cameras such as the PalmPix from Eastman Kodak can be connected to the Palm PDA. In these cases, however, the components are not compatible with other kinds of electronic devices or even with other PDA from other manufacturers.

WO 95/24007 discloses a modular, reconfigurable system designed to permit coupling and decoupling of devices or components of varying types, including portable computers or other electrical devices.

There is a need therefore for an improved display that is compatible with a wide variety of portable electronic devices and avoids the expense of redundant displays for each device.

The need is met according to the present invention by providing a disaggregated flat panel color display, including a frame; an OLED display screen mounted in the frame; an electrical/mechanical interface on the frame for releasably attaching the frame to any one of a plurality of different electronic devices; and a power supply and memory to maintain an image on the display when detached from the electronic devices. As used herein, a disaggregated display means a display that is detachable from and can be used on a variety of different electronic devices.
Fig. 1 is a plan view of a disaggregated display according to the present invention;
Fig. 2 is top view of a disaggregated display according to the present invention;
Fig. 3 is a schematic diagram showing a system including a plurality of electronic devices and a disaggregated display according to the present invention;
Fig. 4 is a perspective view of a disaggregated display used in a digital camera;
Fig. 5 is a schematic block diagram of a disaggregated display according to an alternative embodiment of the present invention;
Fig. 6 is a perspective view of a disaggregated display used in a palm sized computer;
Fig. 7 is a perspective view of a disaggregated display used in a personal digital assistant; and
Fig. 8 is a perspective view of a disaggregated display used in a cell phone.

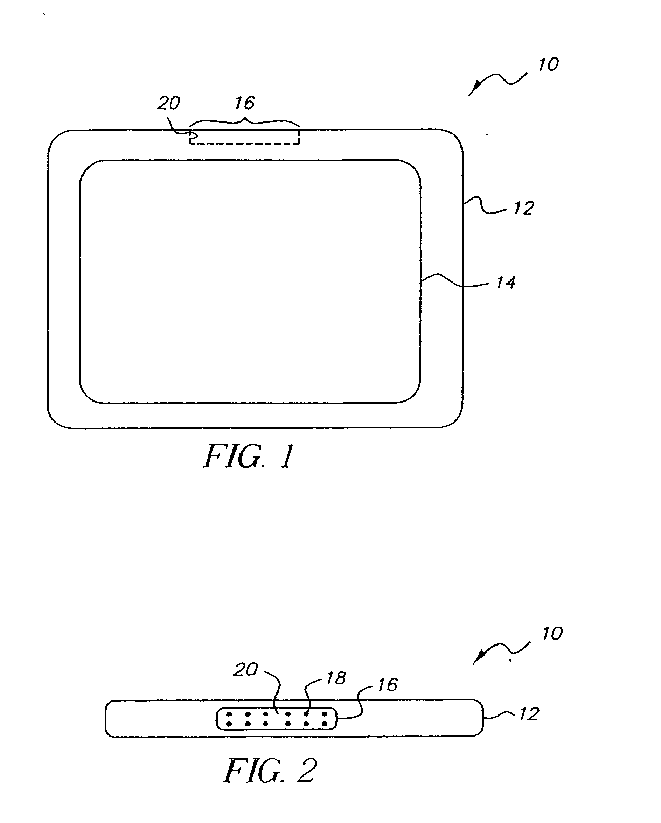

Referring to Figs. 1 and 2, the disaggregated display **10** according to the present invention includes a frame **12**. A color OLED display screen **14** is mounted in the frame. The frame **12** includes an electrical/mechanical interface **16**. The electrical/mechanical interface includes a plurality of electrical conductors **18** that that are electrically connected to the display for providing power and drive signals to the OLED display screen **14**. The electrical mechanical interface also includes a socket **20** for releasably attaching the frame to any one of a plurality of different electronic devices (not shown). The socket **20** is adapted to receive a complementary plug in an electronic device. The size of the OLED display screen is preferably about 10 by 16 cm, with at least quarter VGA resolution (240x320 pixels) but the actual size and resolution are not critical factors.

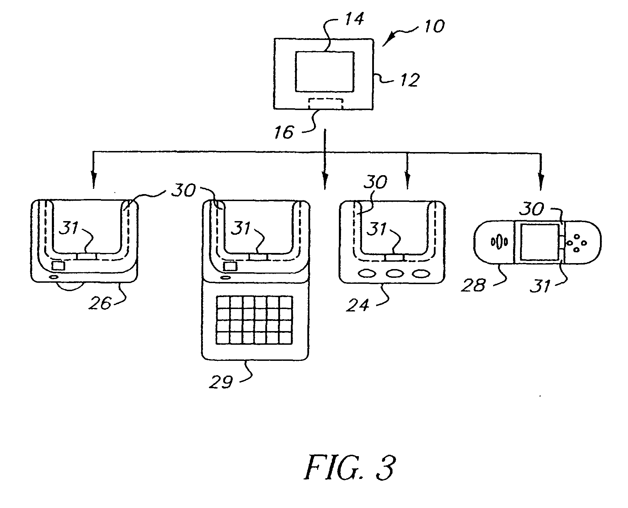

Referring to Fig. 3, a system employing the display according to the present invention is shown. The system includes the disaggregated display **10**, and a plurality of different electronic devices. For example, the electronic devices may include, but are not limited to a PDA **24**, an electronic camera **26**, a cellular telephone **28** and a palm-sized computer **29**. Each of the electronic devices **24**, **26, 28** and **29** includes an electrical/mechanical interface that is complementary to the electrical mechanical interface socket **16** of the display **10**. The electrical, mechanical interface includes, for a example, slot **30** for receiving and mechanically supporting the edges of frame **12** of the disaggregated display **10** and a plug **31** for plugging into socket **20** to make an electrical connection to the electrical components including the OLED display screen **14**.

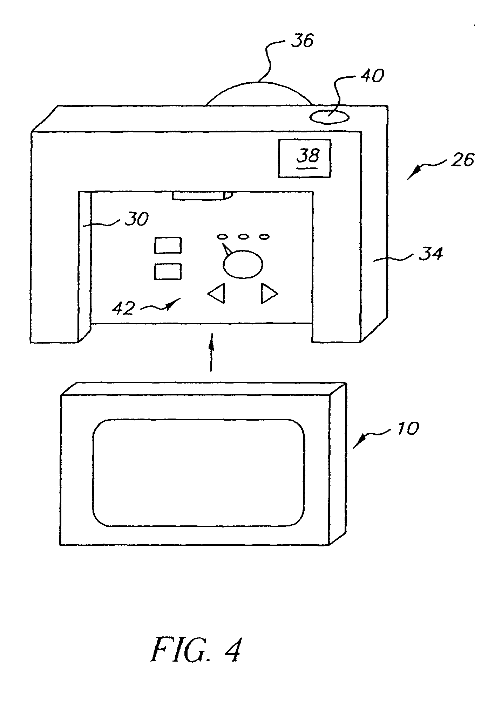

Referring to Fig. 4, an electronic camera **26** for use with the disaggregated display **10**, the camera **26** includes a body **34** defining a slot **30** for receiving the disaggregated display **10**. The camera includes a taking lens **36**, a viewfinder **38**, and a shutter release button **40**. The camera **26** can also include a user interface **42** including a plurality of buttons that are covered when the display is attached to the camera and can be accessed by a user of the camera when the display is not attached.

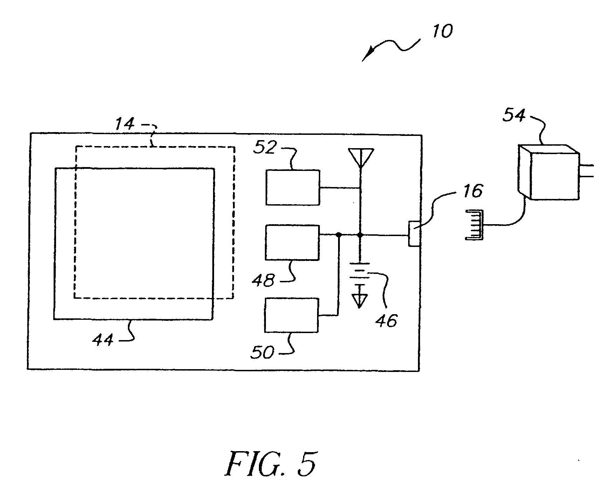

Referring to Fig. 5, in an alternative embodiment of the display **10**, the display includes a touch screen **44**, a power supply **46**, a memory **48** to store data such as image data, and sufficient control electronics **50** such that the display can be used to display captured images when the display is not connected to the camera **10**. The display can then be transported, viewed by others, and passed around to a group of people for viewing independently of the original electronic device. For example, the electronic camera **26** might be used by a photographer to capture a scene. The scene can then be displayed on the display **10**, detached, and given to others to view.

The display **10** may also include a wireless communication transceiver **52** so that the display can communicate with an electronic device such as the camera **26** even when it is not connected to the device. For example, through the wireless transceiver **52**, the display **10** can be used to remotely control the electronic device by displaying a control menu on the display and receiving control inputs from the touch screen **44**. Alternatively, the electronic camera **26** can be operated independently of the display **10** to capture images, and the image data transmitted to and displayed by the display **10**. The disaggregated flat-panel color display device **10** may also include software to provide display services for data or images stored in an electronic device such as a camera.

The power supply **46** can be any conventional portable power supply such as an alkaline battery, a rechargeable battery such as a NiCad battery, or a fuel cell. A rechargeable battery may be recharged from a power supply in the electronic device, or alternatively from an external battery charger **54**.

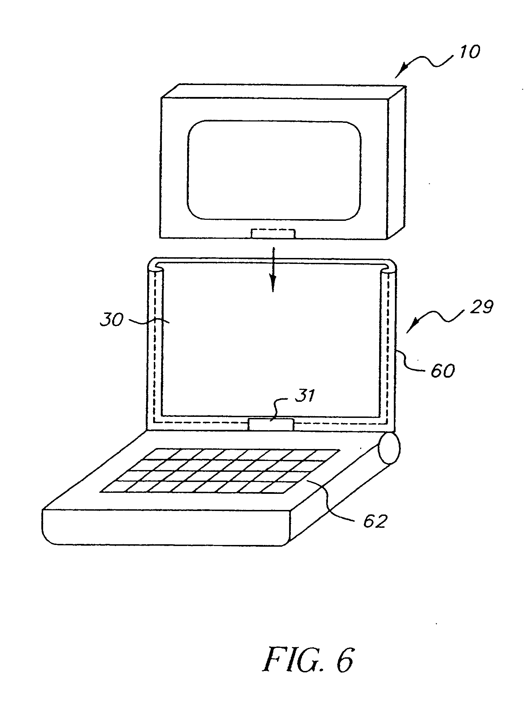

Referring to Fig. 6, a palm sized computer **29** for use with the disaggregated display **10** the computer **29** includes a cover **60** defining a slot **30** for receiving the disaggregated display **10**. The computer includes a keypad **62**. As described above, the display device may include a touch screen, an independent power supply and a wireless transceiver. In this embodiment, the palm sized computer **29** can be operated remotely with the display **10**, either by operating the display from the keyboard, or by operating the computer from the display **10** using the touch screen as a user interface.

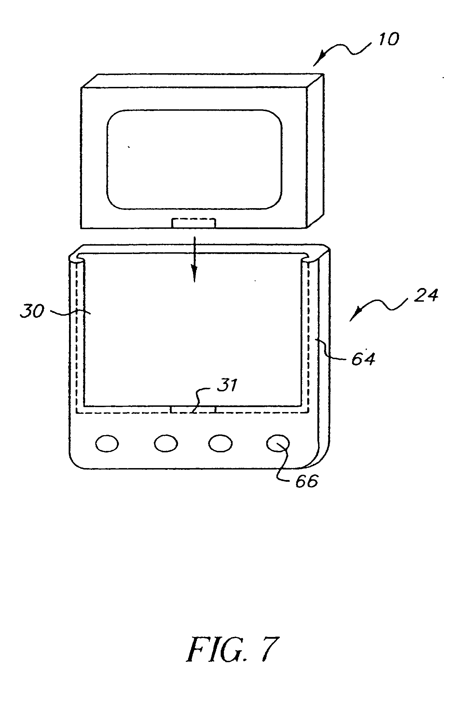

Referring to Fig. 7, a personal digital assistant (PDA) **24** for use with the disaggregated display **10** the PDA **24** includes a body **64** defining a slot **30** for receiving the disaggregated display **10**. The PDA **24** includes a simple user interface such as buttons **66**. As described above the display **10** may include a touch screen, an independent power supply and a wireless transceiver. In this embodiment, the PDA **24** can be operated remotely from the display **10** using the touch screen **44** as a user interface.

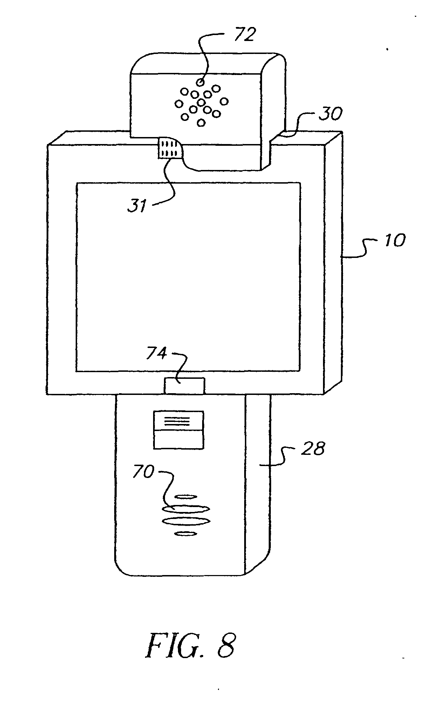

Referring to Fig. 8, a cell phone **28** for use with the disaggregated display **10** defines a slot **30** for receiving the disaggregated display **10**, and a latch **74** for releasably holding the display in the slot **30**. The cell phone **28** includes a microphone **70** and a speaker **72**. As described above the display **10** may include a touch screen, an independent power supply and a wireless transceiver. In this embodiment, the cell phone **28** can be operated remotely from the display **10** using the touch screen **44** as a user interface. As described above with respect to the digital camera, the cell phone **28** may include user interface buttons (not shown) that are hidden when the display is mounted on the cell phone.

Disaggregated displays according to the present invention can be sold independently of the electronic devices, thereby reducing the cost of the electronic devices by sharing the cost of the display with several devices.

## Claims

1. A disaggregated flat-panel color display (10), comprising:
a) a frame (12);
b) an OLED display screen (14) mounted in the frame; and
c) an electrical/mechanical interface (16) on the frame for releasably attaching the frame to any one of a plurality of different electronic devices (24, 26, 28, 29);
**characterised in that** it further comprises:
d) a power supply (46) and memory (48) to maintain an image on the display when detached from the electronic devices.

2. The disaggregated flat-panel color display claimed in Claim 1, wherein the electrical/mechanical interface is compatible with the Digital Video Interface.

3. The disaggregated flat-panel color display claimed in Claim 1, wherein the interface is a radio frequency communications interface for communicating with the electronic device.

4. The disaggregated flat-panel color display device claimed in Claim 1, further comprising: a touch screen mounted over the OLED display screen for providing an interactive user interface.

5. The disaggregated flat-panel color display device claimed in Claim 4, further comprising: a power supply, a memory, and a controller with software to provide imaging review services on the display.

6. The disaggregated flat-panel color display device claimed in Claim 5, further comprising: a wireless communications interface for communicating control instructions to the electronic device.

7. The disaggregated flat-panel color display device claimed in Claim 6, further comprising: software to provide display services for images stored in the electronic device.

8. The disaggregated flat-panel color display device claimed in Claim 4, wherein the display device is adapted to cover controls on the electronic device when the display is attached to the electronic device.

9. The disaggregated flat-panel color display device claimed in Claim 1 wherein the electrical interface includes a power interface.

10. The disaggregated flat-panel color display device claimed in Claim 9, wherein the display power supply is recharged from a power supply in the electronic device.

11. The disaggregated flat- panel color display device claimed in Claim 1, wherein the power supply is a battery.

12. The disaggregated flat- panel color display device claimed in Claim 11, wherein the battery is a rechargeable battery.

13. A system of electronic devices, comprising:
a) a plurality of different electronic devices (24, 26, 28, 29), each having an electrical/mechanical interface (34, 31); and
b) a disaggregated flat panel color display (10) having,
i) a frame (12);
ii) an OLED display screen (14) mounted in the frame; and
iii) an electrical/mechanical interface (16) on the frame for releasably attaching the frame to the electrical/mechanical interface of the plurality of different electronic devices;
**characterised in that** it further has
iv) a power supply (46) and memory (48) to maintain an image on the display when detached from the electronic devices.

14. The system claimed in Claim 13, wherein the display is mechanically mounted on an electronic device to make an apparently single component.

15. The system claimed in Claim 13, wherein the display is mechanically attached to an electronic device through a cable with wires.

16. The system claimed in Claim 13, wherein the electronic devices include one or more devices selected from the group of devices comprising a digital camera, a film camera with a digital display, a PDA, a cell phone, a pager, a game, and a portable computer.

## Patentansprüche

1. Zerlegtes Farbflachdisplay (10), welches umfasst:
a) einen Rahmen (12);
b) ein im Rahmen gelagertes OLED Display (14); und
c) eine auf dem Rahmen vorgesehene elektrisch-mechanische Schnittstelle (16), um den Rahmen an jeder beliebigen aus einer Vielzahl unterschiedlicher elektronischer Vorrichtungen (24, 26, 28, 29) abnehmbar zu befestigen;
**dadurch gekennzeichnet, dass** es außerdem umfasst:
d) ein Stromversorgungsteil (46) und einen Speicher (48) zum Erhalten eines Bildes auf dem Display, wenn dieses von den elektronischen Vorrichtungen abgenommen wird.

2. Zerlegtes Farbflachdisplay nach Anspruch 1, worin die elektrisch-mechanische Schnittstelle mit der digitalen Videoschnittstelle kompatibel ist.

3. Zerlegtes Farbflachdisplay nach Anspruch 1, worin die Schnittstelle eine Hochfrequenz-Kommunikationsschnittstelle zum Kommunizieren mit der elektronischen Vorrichtung ist.

4. Zerlegtes Farbflachdisplay nach Anspruch 1, mit einem über dem OLED Display angebrachten Touchscreen zum Bereitstellen einer Benutzer-Dialogschnittstelle.

5. Zerlegtes Farbflachdisplay nach Anspruch 4, mit einem Stromversorgungsteil, einem Speicher und einer Steuereinrichtung mit Software, um auf dem Display Bildprüfungen vorzunehmen.

6. Zerlegtes Farbflachdisplay nach Anspruch 5, mit einer Drahtlos-Kommunikationsschnittstelle zum Kommunizieren von Bedienungsanweisungen an die elektronische Vorrichtung.

7. Zerlegtes Farbflachdisplay nach Anspruch 6, mit Software zum Bereitstellen von Displaydiensten für in der elektronischen Vorrichtung gespeicherte Bilder.

8. Zerlegtes Flachfarbdisplay nach Anspruch 4, worin das Display Bedienungselemente auf der elektronischen Vorrichtung bedeckt, wenn das Display an der elektronischen Vorrichtung befestigt ist.

9. Zerlegtes Flachfarbdisplay nach Anspruch 1, worin die elektrische Schnittstelle eine Leistungsschnittstelle aufweist.

10. Zerlegtes Flachfarbdisplay nach Anspruch 9, worin das Stromversorgungsteil des Displays mittels eines Stromversorgungsteils in der elektronischen Vorrichtung wieder aufladbar ist.

11. Zerlegtes Flachfarbdisplay nach Anspruch 1, worin das Stromversorgungsteil eine Batterie ist.

12. Zerlegtes Flachfarbdisplay nach Anspruch 11, worin die Batterie wiederaufladbar ist.

13. System aus elektronischen Vorrichtungen, mit
a) einer Vielzahl unterschiedlicher elektronischer Vorrichtungen (24, 26, 28, 29), die jeweils eine elektrisch-mechanische Schnittstelle (30, 31) aufweisen, und
b) einem zerlegten Farbflachdisplay (10), mit
(ii) einem Rahmen (12);
(ii) einem im Rahmen gelagerten OLED Display (14); und
(iii) einer elektrisch-mechanischen Schnittstelle (16) auf dem Rahmen zum lösbaren Befestigen des Rahmens an der elektrisch-mechanischen Schnittstelle aus der Vielzahl unterschiedlicher elektronischer Vorrichtungen;
**dadurch gekennzeichnet, dass** es außerdem umfasst:
(iv) ein Stromversorgungsteil (46) und einen Speicher (48) zum Erhalten eines Bildes auf dem Display, wenn dieses von den elektronischen Vorrichtungen abgenommen wird.

14. System nach Anspruch 13, worin das Display mechanisch auf einer elektronischen Vorrichtung gelagert ist, um eine offensichtlich einzelne Komponente darzustellen.

15. System nach Anspruch 13, worin das Display mittels eines Kabels mit Drähten mechanisch auf einer elektronischen Vorrichtung befestigt ist.

16. System nach Anspruch 13, worin die elektronischen Vorrichtungen eine oder mehrere Vorrichtungen aufweisen, die aus der Gruppe von Vorrichtungen auswählbar sind, die aus einer Digitalkamera, einer Filmkamera mit digitalem Display, einem Mobiltelefon, einem Pager, einem Computerspiel und einem tragbaren Rechner bestehen.

## Revendications

1. Ecran plat couleur dissocié (10), comprenant :
a) un châssis (12) ;
b) un écran OLED (14) monté dans le châssis ; et
c) une interface électrique/mécanique (16) sur le châssis pour fixer, de manière amovible, le châssis à l'un quelconque d'une pluralité de dispositifs électroniques différents (24, 26, 28, 29) ; **caractérisé en ce qu'**il comprend aussi :
d) une alimentation (46) et une mémoire (48) pour conserver une image sur l'écran lorsqu'il est séparé des dispositifs électroniques.

2. Ecran plat couleur dissocié selon la revendication 1, dans lequel l'interface électrique/mécanique est compatible avec l'interface vidéo numérique (Digital Video Interface).

3. Ecran plat couleur dissocié selon la revendication 1, dans lequel l'interface est une interface de communications radioélectriques permettant de communiquer avec le dispositif électronique.

4. Ecran plat couleur dissocié selon la revendication 1, comprenant aussi : un écran tactile monté sur l'écran OLED pour servir d'interface utilisateur interactive.

5. Ecran plat couleur dissocié selon la revendication 4, comprenant aussi : une alimentation, une mémoire et un gestionnaire muni d'un logiciel pour offrir des services de révision d'image sur l'écran.

6. Ecran plat couleur dissocié selon la revendication 5, comprenant aussi : une interface de communications sans fil pour communiquer des instructions de commande au dispositif électronique.

7. Ecran plat couleur dissocié selon la revendication 6, comprenant aussi : un logiciel pour offrir des services d'affichage pour les images stockées dans le dispositif électronique.

8. Ecran plat couleur dissocié selon la revendication 4, dans lequel l'écran est adapté pour recouvrir les commandes sur le dispositif électronique lorsque l'écran est fixé sur le dispositif électronique.

9. Ecran plat couleur dissocié selon la revendication 1, dans lequel l'interface électrique contient une interface d'alimentation.

10. Ecran plat couleur dissocié selon la revendication 9, dans lequel l'alimentation de l'écran est rechargée à partir d'une alimentation dans le dispositif électronique.

11. Ecran plat couleur dissocié selon la revendication 1, dans lequel l'alimentation est assurée par une batterie.

12. Ecran plat couleur dissocié selon la revendication 11, dans lequel la batterie est une batterie rechargeable.

13. Système de dispositifs électroniques comprenant :
a) une pluralité de dispositifs électroniques différents (24, 26, 28, 29) ayant chacun une interface électrique/mécanique (30, 31) ; et
b) un écran plat couleur dissocié (10), comprenant :
i) un châssis (12) ;
ii) un écran OLED (14) monté dans le châssis ; et
iii) une interface électrique/mécanique (16) sur le châssis pour fixer, de manière amovible, le châssis à l'interface électrique/mécanique de la pluralité de dispositifs électroniques différents ; **caractérisé en ce qu'**il contient aussi
iv) une alimentation (46) et une mémoire (48) pour conserver une image sur l'écran lorsqu'il est séparé des dispositifs électroniques.

14. Système selon la revendication 13, dans lequel l'écran est monté mécaniquement sur un dispositif électronique pour former un composant apparemment unique.

15. Système selon la revendication 13, dans lequel l'écran est fixé mécaniquement sur un dispositif électronique par l'intermédiaire d'un câble contenant des fils.

16. Système selon la revendication 13, dans lequel les dispositifs électroniques comprennent un ou plusieurs dispositifs choisis dans le groupe de dispositifs comprenant un appareil photo numérique, un appareil de prise de vue sur film muni d'un écran numérique, un assistant numérique personnel (PDA), un téléphone cellulaire, un bipper, un jeu et un ordinateur portatif.
